(19) Europäisches Patentamt
European Patent Office
Office européen des brevets

(11) **EP 3 197 968 B1**

(12) **EUROPÄISCHE PATENTSCHRIFT**

(45) Veröffentlichungstag und Bekanntmachung des Hinweises auf die Patenterteilung:
**15.05.2019   Patentblatt 2019/20**

(21) Anmeldenummer: **15759691.7**

(22) Anmeldetag: **21.08.2015**

(51) Int Cl.:
*C09J 7/29* (2018.01)          *B32B 7/12* (2006.01)
*H01B 7/18* (2006.01)          *B32B 5/02* (2006.01)
*B32B 5/24* (2006.01)          *B32B 7/04* (2019.01)
*B32B 15/04* (2006.01)          *B32B 15/14* (2006.01)
*B32B 27/06* (2006.01)          *H01B 7/282* (2006.01)
*H02G 3/04* (2006.01)          *B32B 27/08* (2006.01)

(86) Internationale Anmeldenummer:
**PCT/EP2015/069233**

(87) Internationale Veröffentlichungsnummer:
**WO 2016/045890 (31.03.2016 Gazette 2016/13)**

(54) **VERFAHREN ZUR HERSTELLUNG EINER UMMANTELUNG FÜR LANGGESTRECKTES GUT**

METHOD FOR PRODUCING A CLADDING FOR ELONGATED MATERIAL

PROCÉDÉ POUR LA FABRICATION D'UNE GAINE POUR UN PRODUIT ALLONGÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2014   DE 102014113769**

(43) Veröffentlichungstag der Anmeldung:
**02.08.2017   Patentblatt 2017/31**

(73) Patentinhaber: **certoplast Technische Klebebänder GmbH**
**42285 Wuppertal (DE)**

(72) Erfinder:
• **RAMBUSCH, Peter**
**42115 Wuppertal (DE)**
• **HOHMANN, Andreas Franz**
**42285 Wuppertal (DE)**

• **LEERMANN, Timo**
**42285 Wuppertal (DE)**
• **RUHNAU, Kay**
**42285 Wuppertal (DE)**

(74) Vertreter: **Nunnenkamp, Jörg**
**Andrejewski - Honke**
**Patent- und Rechtsanwälte Partnerschaft mbB**
**An der Reichsbank 8**
**45127 Essen (DE)**

(56) Entgegenhaltungen:
**EP-A1- 2 546 317          EP-A1- 2 578 401**
**EP-A2- 1 300 452          WO-A1-2013/086320**
**DE-A1-102005 013 124          DE-U1-202005 017 807**
**DE-U1-202007 012 475**

**Beschreibung**

Die Erfindung betrifft ein Verfahren zur Herstellung einer Ummantelung für langgestrecktes Gut, insbesondere einer Umhüllung für Kabelsätze, wonach ein Klebeband aus einem Träger und einer den Träger an seiner Frontseite vollflächig bedeckenden ersten Klebebeschichtung mit einem klebebeschichtungsfreien Trägerband zu einem Laminat vereinigt wird, indem das Klebeband mit seiner ersten Klebebeschichtung unter Definition eines ersten Überstandes an wenigstens einer seiner beiden Längskanten an das Trägerband angelegt wird, und wonach der Träger des Klebebandes zusätzlich an seiner Rückseite teilflächig mit einer weiteren zweiten Klebebeschichtung ausgerüstet wird.

Die erste Klebebeschichtung bedeckt den Träger an seiner Frontseite im Wesentlichen vollflächig. D.h., die Erfindung umfasst nicht nur flächenmäßig durchgängige Klebebeschichtungen der gesamten Frontseite des Trägers, sondern prinzipiell auch eine die Frontseite bedeckende Streifenbeschichtung oder sogar auch eine nur punktuelle Beschichtung der Frontseite mit dem betreffenden Kleber.

Das Trägerband ist demgegenüber klebebeschichtungsfrei ausgelegt. D.h., bei dem Trägerband handelt es sich ausdrücklich nicht um ein Klebeband, weil eine Klebebeschichtung fehlt. Gleichwohl kann das Trägerband prinzipiell mit einer nicht klebenden Beschichtung ausgerüstet werden, beispielsweise einer Lackbeschichtung oder ähnlichem.

Das Klebeband wird zur Vereinigung mit dem Trägerband mit seiner ersten Klebebeschichtung an das Trägerband angelegt. Hierbei wird ein erster Überstand des Klebebandes gegenüber dem Trägerband definiert. An diesem ersten Überstand ist folglich die nach außen weisende Klebebeschichtung des Klebebandes realisiert, welche im Regelfall als Fixierstreifen des Laminates zur Festlegung an dem langgestreckten Gut fungiert, wie nachfolgend im Detail noch erläutert wird. Diese Vorgehensweise ist aus der DE 20 2007 012 475 U1 bekannt.

Im Stand der Technik nach der US 4 327 246 wird so vorgegangen, dass letztendlich zwei Klebebänder mit einem gemeinsamen Träger ausgerüstet werden, der zumindest zunächst klebebeschichtungsfrei ausgerüstet ist. Im Detail sind die beiden Klebebänder in Laufrichtung jeweils klebemassenseitig mit Versatz aufeinander laminiert. Um das langgestreckte Gut zu bündeln, wird das bekannte Laminat parallel hierzu ausgerichtet und dann um das langgestreckte Gut herumgewickelt. An dieser Stelle kann prinzipiell auch mit einer spiralförmigen oder schraubenförmigen Bewegung gearbeitet werden.

Zum einschlägigen Stand der Technik gehört auch die Lehre nach der EP 1 875 573 B1. Dabei kommen insgesamt drei Klebebänder zum Einsatz. Zunächst werden ein erstes und ein zweites einseitig klebend ausgerüstetes Klebeband in Laufrichtung jeweils klebemasseseitig mit Versatz aufeinander laminiert. An der freien Kante des ersten Klebebandes der Umhüllung ist dann noch ein drittes einseitig klebend ausgerüstetes Klebeband auf das erste Klebeband in Laufrichtung wiederum klebemasseseitig mit Versatz auflaminiert. Das dritte Klebeband ist hierbei auf der gleichen Seite des ersten Klebebandes angeordnet wie das zweite Klebeband.

Dadurch wird zwar die Möglichkeit geschaffen, Kabelsätze zu bandagieren und einen signifikanten Schutz gegen mechanische Beschädigungen durch Scheuern und Reiben an scharfen Kanten, Graten und Schweißpunkten zu erreichen. Allerdings ist die Herstellung aufwendig. Denn die insgesamt drei einseitig klebend ausgerüsteten Klebebänder müssen in bestimmter Verfahrensabfolge mit Versatz aufeinander laminiert werden. Etwaige Korrekturen sind bei dieser Vorgehensweise nicht möglich, so dass gegebenenfalls mit Schutzfilmen gearbeitet werden muss.

Bei der EP 1 312 097 B1 ist eine textile Eindeckung vorgesehen, die in einem schmalen Kantenbereich mit einem selbstklebend ausgerüsteten Klebeband flankiert wird. Außerdem ist ein weiteres zweites selbstklebend ausgerüstetes Klebeband realisiert. Beide Klebebänder erstrecken sich über die zugehörigen Längskanten der Eindeckung. Auf diese Weise soll eine einfache, preiswerte und schnelle Ummantelung ermöglicht werden. Die Eindeckung ist selbst klebemassenfrei ausgelegt. Allerdings kommen erneut und obligatorisch wenigstens zwei selbstklebend ausgerüstete Klebebänder zum Einsatz, deren Handhabung bei der Herstellung des Laminates aufwendig und problembehaftet ist.

Beim gattungsbildenden Stand der Technik nach der EP 1 300 452 A2 wird so vorgegangen, dass ausweislich der dortigen Fig. 7 im weitesten Sinne ein klebstoffbeschichteter Träger mit vollflächiger Klebstoffbeschichtung auf der ersten Seite überlappend mit einem laminierten beschichtungsfreien Trägerband kombiniert wird. Die Rückseite des klebstoffbeschichteten Trägers ist mit einer zweiten Klebebeschichtung ausgerüstet. Auf diese Weise kann insgesamt eine Ummantelung von langgestrecktem Gut und insbesondere von Kabelsätzen vorgenommen werden.

Der Erfindung liegt das technische Problem zugrunde, ein derartiges Verfahren zur Herstellung einer Ummantelung für langgestrecktes Gut so weiter zu entwickeln, dass die Produktion vereinfacht ist und insgesamt verringerte Kosten beobachtet werden.

Zur Lösung dieser technischen Problemstellung ist ein Verfahren nach Anspruch 1 vorgesehen.

Dabei wird die teilflächige weitere zweite Klebebeschichtung an der Rückseite des Trägers des Klebebandes erst aufgebracht, wenn das Klebeband mit dem Träger vereinigt worden ist. Grundsätzlich ist es aber auch möglich, sowohl die erste als auch die zweite Klebebeschichtung von vornherein auf dem Träger vorzusehen und das solchermaßen ausgerüstete Klebeband insgesamt mit dem Träger zu dem Laminat zu vereinigen.

Im Regelfall kommt jedoch ein selbstklebendes Klebeband an dieser Stelle zum Einsatz, welches bereits über die erste Klebebeschichtung an der Frontseite verfügt, dessen Rückseite allerdings - zunächst - klebeschichtungsfrei ausgebildet ist. Sobald dieses selbstklebend ausgerüstete Klebeband mit dem Träger zu dem Laminat vereinigt worden ist, kann in einem abschließenden Schritt die Rückseite des Trägers des betreffenden Klebebandes zusätzlich mit der weiteren zweiten Klebebeschichtung ausgerüstet werden.

Wie bereits erläutert, ist der Träger des Klebebandes an seiner Frontseite mit der ersten Klebeschichtung ausgerüstet, welche die fragliche Frontseite im Wesentlichen vollflächig bedeckt. Dagegen sorgt die an der Rückseite des Trägers vorgesehene zweite Klebebeschichtung nur für eine im Wesentlichen teilflächige Klebebeschichtung. Hiermit ist gemeint, dass die fragliche Rückseite des Trägers lediglich zum Teil von der zweiten Klebebeschichtung bedeckt wird, nämlich über eine Teilfläche gesehen. Die Relativierung im Wesentlichen drückt in gleicher Weise wie bei der ersten Klebebeschichtung aus, dass die zweite Klebebeschichtung prinzipiell auch als Streifenbeschichtung, punktförmige Beschichtung etc. ausgebildet sein kann, solange die Klebebeschichtung die fragliche Rückseite lediglich teilflächig erfasst.

So oder so verzichtet die Erfindung zunächst einmal auf die Handhabung und Verarbeitung von drei jeweils einseitig klebend ausgerüsteten Klebebändern, die nach Lehre der EP 1 875 573 B1 obligatorisch miteinander verarbeitet werden müssen. Vielmehr kommt lediglich ein (einziges) einseitig klebend ausgerüstetes Klebeband zum Einsatz, welches mit dem Träger zum Laminat vereinigt wird und schlussendlich an seiner Rückseite mit der zweiten Klebebeschichtung im Wesentlichen teilflächig ausgerüstet wird. Dadurch sind etwaige Handhabungsprobleme von vornherein ausgeschlossen. Im Unterschied zu der Lehre nach der EP 1 312 097 B1 werden ebenfalls Vereinfachungen beobachtet, weil im Rahmen der Erfindung und nach vorteilhafter Ausgestaltung ein einziges Klebeband aus dem Träger und der Klebebeschichtung an der Frontseite mit dem Trägerband zu dem Laminat vereinigt wird.

Bei dem klebebeschichtungsfreien Trägerband handelt es sich typischerweise um ein textiles Bandmaterial. Grundsätzlich kann an dieser Stelle auch mit einer Kunststofffolie, einer Metallfolie, einer Papierfolie, einer Papierbahn oder einem anderen flächigen Material gearbeitet werden. Sofern das Trägermaterial bzw. das Material für das Trägerband als textiles Bandmaterial ausgebildet ist, haben sich flächige Vliesmaterialen, Gewebe, Gewirke, Velours, aber auch Filz- oder Schaumstofflagen als günstig erwiesen. Da darüber hinaus die erfindungsgemäße Umhüllung zur Herstellung einer Ummantelung des langgestreckten Gutes eingesetzt wird, lassen sich bestimmte zusätzliche Eigenschaften bei dem Trägerband je nach Materialwahl realisieren.

Hierbei geht die Erfindung insgesamt von der Erkenntnis aus, dass das genannte Trägerband bei der Herstellung der Ummantelung in unmittelbarem körperlichen Kontakt zu dem langgestreckten Gut kommt. Meistens wird ein Kontakt des Trägerbandes mit dem langgestreckten Gut über eine Länge beobachtet, welche wenigstens einem halben Wickel entspricht. Denn bei der Herstellung der Ummantelung wird so vorgegangen, dass die Umhüllung respektive das Laminat um das langgestreckte Gut längsgewickelt wird.

Durch den körperlichen Kontakt zwischen dem Trägerband und dem langgestreckten Gut bei der Herstellung der Ummantelung empfiehlt es sich beispielsweise, das Trägerband aus einem Velours oder auch einem Schaumstoff herzustellen, wenn Klappergeräusche des langgestreckten Gutes zu befürchten sind oder unterdrückt werden müssen. Auch andere Funktionen des Trägerbandes sind möglich, beispielsweise derart, dass Feuchtigkeit aufgenommen wird, so dass Vliesmaterialien besonders geeignet sind. Ebenso kann das Trägermaterial eine zusätzliche elektrische Isolierung zur Verfügung stellen, die man dadurch gewährleistet, dass an dieser Stelle beispielsweise Kunststoffe mit hohem elektrischen Widerstand bearbeitet werden. Jedenfalls ist diesen sämtlichen Materialien gemein, dass die Flächenmasse des Trägerbandes im Regelfall unterhalb von 500 g/m$^2$ und insbesondere sogar weniger als 250 g/m$^2$ beträgt.

Wie bereits erläutert, ist das Trägerband erfindungsgemäß klebebeschichtungsfrei ausgebildet, verfügt also nicht über eine Klebebeschichtung. Grundsätzlich sind natürlich prinzipiell Beschichtungen wie eine Lackbeschichtung denkbar. Aus Kostengründen wird man hierauf im Allgemeinen verzichten und das Trägerband nicht nur klebebeschichtungsfrei, sondern im Regelfall sogar generell beschichtungsfrei auslegen.

Da das Trägerband klebebeschichtungsfrei ausgebildet ist, kann es problemlos und ohne Schwierigkeiten bei der Orientierung mit dem einseitig mit der Klebebeschichtung ausgerüsteten einen (einzigen) Klebeband zu dem Laminat vereinigt werden. Hierzu ist es lediglich erforderlich, dass das fragliche (einzige) Klebeband mit seiner ersten Klebebeschichtung an das Trägerband angelegt wird. Folgerichtig kommt das Trägerband in Kontakt mit der ersten Klebebeschichtung und wird bei diesem Vorgang im einfachsten Fall schlicht und ergreifend mit dem Klebeband verklebt.

Bei der zweiten Klebebeschichtung an der Rückseite des Trägers des Klebebandes handelt es sich um eine solche Klebebeschichtung, die im einfachsten Fall mit Hilfe einer Maske auf die fragliche Rückseite des Trägers aufgebracht wird. Dadurch lässt sich einfach und problemlos die angesprochene teilflächige Beschichtung mit der weiteren zweiten Klebebeschichtung realisieren. Alternativ hierzu kann die zweite Klebebeschichtung auch von einem Transferband respektive Transferfilm getragen werden und mit Hilfe dieses Transferbandes bzw. Transferfilmes dann an der Rückseite des Klebebandes angebracht werden.

Dabei wird man meistens so vorgehen, dass das Klebeband mit seiner ersten Klebebeschichtung unter Definition jeweils eines Überstandes an seinen beiden Längskanten an das Trägerband angelegt wird. D.h., nach vorteilhafter Ausgestaltung ist nicht nur der erste Überstand realisiert, sondern zusätzlich ein weiterer zweiter Überstand, und zwar an den beiden Längskanten des Klebebandes. Dadurch steht das Klebeband mit seinen beiden Längskanten gegenüber dem Trägerband über und weist die Klebebeschichtung des Klebebandes im Bereich des jeweiligen Überstandes nach außen hin. Dadurch können die beiden Überstände zur Fixierung und Festlegung der Ummantelung an dem langgestreckten Gut besonders vorteilhaft eingesetzt werden.

Tatsächlich fungiert der erste Überstand in diesem Zusammenhang meistens als Fixierstreifen und sorgt dafür, dass das Laminat an dem langgestreckten Gut festgelegt wird. Demgegenüber fungiert der zweite Überstand mit der dort ebenfalls freiliegenden und nach außen weisenden Klebebeschichtung meistens als Verschlussstreifen. Tatsächlich ist die Auslegung im Regelfall so getroffen, dass die nach außen weisende Klebebeschichtung des Verschlussstreifens mit der weiteren zweiten Klebebeschichtung am Ende des Ummantelungsvorganges in Kontakt kommt, so dass ein besonders haltbarer endseitiger Verschluss durch die beiden sich berührenden ersten und zweiten Klebebeschichtungen zur Verfügung gestellt wird.

Die beiden vorteilhaft vorgesehenen Überstände verfügen in der Regel über eine unterschiedliche Breite. Tatsächlich beobachtet man an dieser Stelle ein Breitenverhältnis der beiden Überstände und folglich des Fixierstreifens bzw. ersten Überstandes im Vergleich zum Verschlussstreifen bzw. zum zweiten Überstand im Bereich von 1:1 bis 1:5 und vorzugsweise im Bereich von 1:1 bis 1:3.

Außerdem ist die Auslegung meistens so getroffen, dass das Klebeband als solches eine Breite aufweist, welche diejenige des Trägerbandes um den Betrag des bzw. der Überstände übersteigt. Sofern nur ein Überstand des Klebebandes gegenüber dem Trägerband realisiert ist, weist das Klebeband eine Breite auf, welche sich aus der Summe der Breite des Trägerbandes und der Breite des ersten Überstandes zusammensetzt. Sind jedoch zwei Überstände realisiert, so setzt sich die Breite des Klebebandes aus der Summe der beiden Breiten der Überstände zuzüglich der Breite des Trägerbandes zusammen.

Da das Klebeband an seinen beiden Überständen mit der jeweils nach außen weisenden Klebebeschichtung angeordnet wird und diese Klebebeschichtungen für die Verklebung zur Verfügung stehen, können auf einfache Art und Weise einerseits der Fixierstreifen und andererseits der Verschlussstreifen wie erläutert definiert und umgesetzt werden.

Die zweite Klebebeschichtung an der Rückseite des Trägers ist im Allgemeinen nicht zentral im Vergleich zum Klebeband angeordnet. Vielmehr wird die zweite Klebebeschichtung an der Rückseite des Trägers gegenüber einer Zentralebene in Richtung auf den ersten Überstand versetzt angeordnet. Bei dieser Zentralebene des Klebebandes handelt es sich um die Spiegelsymmetrieebene für das Klebeband, welche das einseitig mit der Klebebeschichtung ausgerüstete Klebeband in seiner Längserstreckung in zwei gleiche Teilbänder unterteilt. Gegenüber dieser Zentralebene ist die zweite Klebebeschichtung an der Rückseite des Trägers in Richtung auf den ersten Überstand versetzt angeordnet.

Diese Anordnung trägt dem Umstand Rechnung, dass der erste Überstand als Fixierstreifen fungiert und dann die Ummantelung um das langgestreckte Gut längsgewickelt wird. Bei diesem Vorgang kommt es zu einer zumindest im End- oder Verschlussbereich des Längswickels beobachteten mehrschichtigen Anordnung des Laminates, so dass sich der Versatz erklärt.

Die zweite Klebebeschichtung verfügt über eine Breite, welche in etwa derjenigen des zweiten Überstandes entspricht. Aufgrund der zuvor bereits geschilderten Größenverhältnisse bzw. Breitenverhältnisse des ersten im Vergleich zum zweiten Überstandes im Bereich von 1:1 bis 1:5 ist die zweite Klebebeschichtung mit einer Breite ausgerüstet, welche derjenigen des zweiten Überstandes entspricht und regelmäßig die Breite des ersten Überstandes überschreitet. Insbesondere sollte die Breite des zweiten Überstandes bzw. des Verschlussstreifens mindestens der Breite der zweiten Klebebeschichtung entsprechen, um den gewünschten sicheren Verschluss der Ummantelung durch den beschriebenen gegenseitigen Kontakt herzustellen.

Der Überstand selbst weist eine Breite auf, welche deutlich unterhalb der Breite des Klebebandes angesiedelt ist. Tatsächlich empfiehlt die Erfindung in diesem Zusammenhang eine Auslegung, wonach der Überstand mit einer Breite ausgerüstet ist, welche im Vergleich zur Breite des Klebebandes 5% bis 30% beträgt. Vorzugsweise liegt die Breite des Überstandes im Vergleich zur Breite des Klebebandes im Bereich von 10% bis 20% der Breite des Klebebandes. Dadurch ist sichergestellt, dass das Klebeband mit seinem einen oder den beiden Überständen maximal zu 30% seiner Breite an der jeweiligen Längskante übersteht.

Bei der Ummantelung des langgestreckten Gutes wird erfindungsgemäß so vorgegangen, dass das Laminat mit seinem ersten Überstand parallel zum langgestreckten Gut ausgerichtet und hieran festgelegt wird. Der erste Überstand fungiert also als Fixierstreifen. Anschließend wird das Laminat um das Gut längsgewickelt und abschließend mit der zweiten Klebebeschichtung zum Längswickel verklebt. In diesem Zusammenhang fungiert in der Regel der zweite Überstand als Verschlussstreifen und kommt mit der zweiten Klebebeschichtung wie beschrieben in Kontakt, so dass ein besonders fester und langhaltender Verschluss endseitig der Längsumhüllung bzw. des Längswickels beobachtet wird. Auf diese Weise kann insgesamt auch eine Ummantelung für langgestrecktes Gut hergestellt werden.

Gegenstand der Erfindung ist auch eine Umhüllung, die zur Herstellung einer Ummantelung für langgestrecktes Gut besonders geeignet ist. Die fragliche Umhüllung wird im Anspruch 10 beschrieben.

Im Ergebnis werden ein Verfahren zur Herstellung einer Ummantelung für langgestrecktes Gut und eine korrespondierende Umhüllung beschrieben, die beide für einen besonderen mechanischen Schutz des langgestreckten Gutes sorgen. Hierbei handelt es sich meistens um einen oder mehrere Kabelstränge. Außerdem wird die Ummantelung bzw. Umhüllung im Regelfall in Verbindung mit Kabelsträngen in Automobilen eingesetzt. Dabei sorgt die Ummantelung insgesamt für einen Schutz der einzelnen Kabelstränge bzw. Kabelsätze gegen mechanische Schäden. Diese können beispielsweise durch Scheuern und Schneiden in einem Kraftfahrzeug auftreten und werden erfindungsgemäß beherrscht.

Die beschriebene Vorgehensweise sowie die zugehörige Umhüllung lassen sich besonders einfach und kostengünstig realisieren. Das ist vor dem Hintergrund des enormen Preiswettbewerbes auf dem Automobilsektor von besonderer Bedeutung. Hierin sind die wesentlichen Vorteile zu sehen.

Im Folgenden wird die Erfindung anhand lediglich ein Ausführungsbeispiel darstellenden Zeichnung näher erläutert; es zeigen:

Fig. 1A bis 1C      ein Verfahren zur Herstellung einer Ummantelung für langgestrecktes Gut in verschiedenen Verfahrensstufen und

Fig. 2      die am langgestreckten Gut angebrachte Ummantelung.

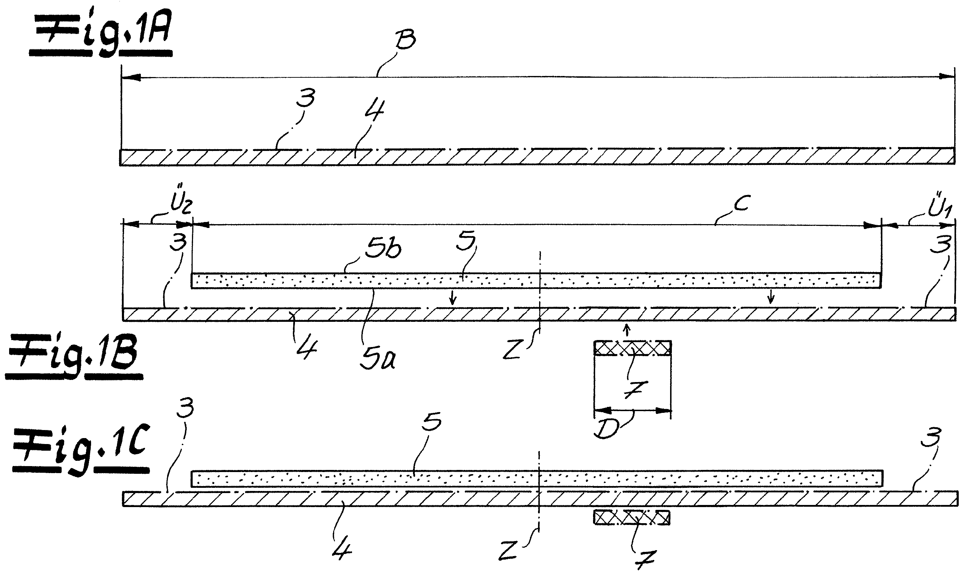

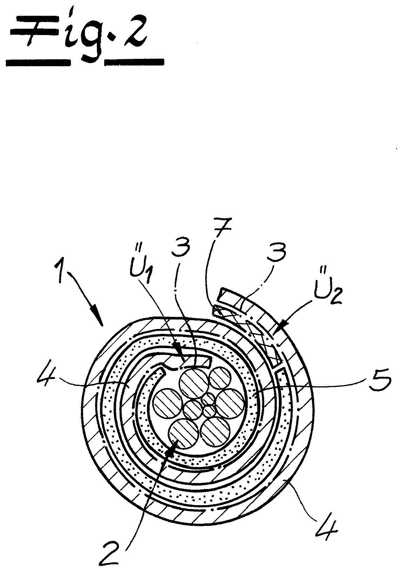

In den Figuren ist eine Ummantelung 1 für langgestrecktes Gut 2 dargestellt. Bei dem langgestreckten Gut 2 handelt es sich im Ausführungsbeispiel und nicht einschränkend um mehrere zusammengefasste Kabelstränge, Kabelsätze etc. in einem Kraftfahrzeug. Mit Hilfe der Ummantelung 1 wird nun das langgestreckte Gut 2 bzw. werden die einzelnen Kabelstränge in ihrer Längserstreckung umhüllt. Die Ummantelung 1 korrespondiert folglich zu einem Längswickel als Umhüllung, wie dies die Fig. 2 zeigt und dessen Herstellung im Detail in den Fig. 1A bis 1C dargestellt ist. Hier erkennt man die Ummantelung 1 und die einzelnen Herstellungsschritte in ausgestrecktem Zustand.

Bei der Herstellung der Ummantelung 1 wird zunächst ein mit einer Klebebeschichtung 3 ausgerüstetes Klebeband 3, 4 zur Verfügung gestellt. Die Klebeschichtung 3 bedeckt einen Träger 4 des Klebebandes 3, 4 an seiner Frontseite im Wesentlichen vollflächig, wie die Fig. 1A deutlich macht. Das Klebeband 3, 4 ist insgesamt mit einer Breite B ausgerüstet.

Bei dem Träger 4 des Klebebandes 3, 4 kann es sich um einen solchen aus einem Gewebe oder Gewirke handeln. Im Regelfall kommt ein PET (Polyethylenterephthalat)-Gewebe oder auch ein Polyamid-Gewebe zum Einsatz. Generell kann der Träger 4 aber auch als Velourträger oder Gewirke sowie Gelege ausgebildet sein. Im Allgemeinen handelt es sich bei dem Träger 4 um einen textilen Träger 4, der grundsätzlich auch als Vlies ausgebildet sein mag.

Der Träger 4 des Klebebandes 3, 4 kann auch noch weitere Funktionen übernehmen, zusätzlich zu seiner grundsätzlichen Funktion, eine Auftragsfläche für die Klebebeschichtung 3 zur Verfügung zu stellen. So ist es denkbar, dass der Träger 4 auf seiner der Klebebeschichtung 3 gegenüberliegenden Oberfläche mit einer Lackbeschichtung, einer Folienbeschichtung etc. ausgerüstet ist, um nach Anbringung der Ummantelung die solchermaßen umhüllten Kabelstränge respektive das langgestreckte Gut 2 vor Feuchtigkeit, beispielsweise Spritzwasser zu schützen. In diesem Zusammenhang kann der Träger 4 grundsätzlich auch als Folie ausgebildet sein. Hierbei geht die Erfindung von der grundsätzlichen Erkenntnis aus, dass bei angebrachter Ummantelung 1 an dem langgestreckten Gut 2 die der Klebebeschichtung 3 gegenüberliegende Oberfläche des Klebebandes 3, 4 nach außen hin weist, folglich die beschriebene Zusatzfunktion besonders vorteilhaft übernehmen kann.

Darüber hinaus kann der Träger 4 als Hitze- oder Wärmeschild fungieren, wenn die Ummantelung 1 im Bereich heißer Motorteile angebracht werden soll, insbesondere zur Umhüllung von Kabeln im Motorraum eines Kraftfahrzeuges. In diesem Fall mag der Träger 4 als Metallfolie ausgelegt sein. Es ist aber auch denkbar, einen textilen Träger mit einer Metallfolie auf seiner der Klebebeschichtung 3 entgegengesetzten Oberfläche auszurüsten, um insbesondere Wärmestrahlung zu reflektieren. Dann wirkt die nach außen weisende Metallfolie als gleichsam Wärmeschild.

Das Klebeband 3,4 verfügt über eine Breite B im Bereich von ca. 80 mm bis 600 mm. Vorzugsweise liegt die Breite B im Bereich zwischen 80 mm und 300 mm. Das Flächengewicht des jeweiligen Klebebandes 3, 4 ist im Bereich von 40 g/m$^2$ bis 800 g/m$^2$ und vorzugsweise zwischen 100 g/m$^2$ und 500 g/m$^2$ angesiedelt. Seine Dicke mag im Bereich zwischen 0,1 mm bis 5 mm und vorzugsweise im Bereich zwischen 0,2 mm bis 1 mm angesiedelt sein.

Bei der Klebebeschichtung 3 handelt es sich um eine Klebemasse auf Basis von Natur- oder Synthesekautschuk. Meistens wird ein Acrylatkleber und insbesondere Hotmelt-Kleber eingesetzt. Grundsätzlich können auch Klebemassen auf Silikon-, Polyurethan- oder Polyetherbasis zum Einsatz kommen.

Als Auftragsgewichte für die Klebebeschichtung 3 empfiehlt die Erfindung Werte im Bereich zwischen ca. 20 g/m$^2$ bis 300 g/m$^2$.

Das einseitig mit der Klebebeschichtung 3 ausgerüstete Klebeband 3,4 wird mit Hilfe eines Trägerbandes 5 zu einem Laminat 3, 4, 5 vereinigt. Zu diesem Zweck wird das eine (einzige) Klebeband 3, 4 in Längserstreckung unter Definition eines ersten Überstandes

$Ü_1$ an wenigstens einer seiner beiden Längskanten an das Trägerband 5 angelegt, wie dies beim Übergang von der Fig. 1B zur Fig. 1C deutlich wird.

Bei diesem Vorgang wird das klebebeschichtungsfrei ausgebildete Trägerband 5 mit der Klebeschichtung 3 des zugehörigen Klebebandes 3, 4 verklebt. Das geschieht derart, dass das einseitig beschichtete einzige Klebeband 3, 4 im Beispielfall an der Vorderseite 5a des Trägerbandes 5 angeordnet bzw. mit der Vorderseite 5a verklebt wird. In der Fig. 1B ist dann noch die Rückseite 5b des Trägerbandes 5 zu erkennen. Jedenfalls wird das Trägerband 5 mit seiner Vorderseite 5a unmittelbar auf die Klebebeschichtung 3 des Klebebandes 3, 4 aufgedrückt und haftet dann auf der Klebebeschichtung 3.

Nachdem das Trägerband 5 mit dem Klebeband 3, 4 zu dem Laminat 3, 4, 5 vereinigt worden ist, wird erfindungsgemäß der Träger 4 des Klebebandes 3, 4 an seiner Rückseite, d.h., der dem Trägerband 5 bzw. der Klebebeschichtung 3 abgewandten Seite, mit einer weiteren zweiten Klebebeschichtung 7 ausgerüstet. Während sich also das Trägerband 5 an der Vorderseite des Klebebandes 3, 4 befindet und dort angeordnet ist, ist die zweite Klebebeschichtung 7 an der Rückseite des Klebebandes 3, 4 platziert.

Man erkennt, dass die weitere zweite Klebebeschichtung 7 - ergänzend zu der ersten Klebebeschichtung 3 des Klebebandes 3, 4 - lediglich teilflächig an der Rückseite des betreffenden Klebebandes 3, 4 vorgesehen ist.

Um diese teilflächige Ausrüstung der Rückseite des Trägers 4 des Klebebandes 3, 4 im Detail zu realisieren, kann der an dieser Stelle eingesetzte Kleber durch Aufsprühen unter Berücksichtigung einer Maske auf die Rückseite des Trägers 4 aufgebracht werden. Im Ausführungsbeispiel ist die weitere zweite Klebebeschichtung 7 deutlich dicker als die erste Klebebeschichtung 3 dargestellt. Diese abweichende Darstellungsform dient lediglich dazu, um den Herstellungsprozess und die Anordnung der weiteren zweiten Klebebeschichtung 7 deutlich zu machen. Tatsächlich werden beide Klebebeschichtungen 3, 7 im Regelfall mit vergleichbaren Flächenauftragsgewichten bzw. Flächenmassen auf den zugehörigen Träger 4 aufgebracht. Dieses Flächenauftragsgewicht bzw. die Flächenmasse ist meistens im Bereich von 30 g/m$^2$ bis 300 g/m$^2$ angesiedelt.

Alternativ hierzu ist es auch möglich, dass die Klebebeschichtung 7 auf einem nicht dargestellten Transferfilm vorhanden ist und mit Hilfe des Transferfilmes auf die Rückseite des Trägers 4 aufgebracht wird. Auch andere Vorgehensweisen zur Anbringung der Klebebeschichtung 7 an der Rückseite des Trägers 4 werden von der Erfindung umfasst, beispielsweise das sogenannte "kiss coating" oder auch das "curtain coating". Darüber hinaus lässt sich die Klebebeschichtung 7 mit Hilfe des zuvor bereits angesprochenen Spühcoating-Verfahrens an der Rückseite des Trägers 4 definieren.

In topologischer Hinsicht ist die Auslegung insgesamt so getroffen, dass das Klebeband 3, 4 mit seiner ersten Klebebeschichtung 3 unter Definition jeweils eines Überstandes $Ü_1$; $Ü_2$ an seinen beiden Längskanten an das Trägerband 5 angelegt wird. Dabei erfolgt die Orientierung derart, dass das Klebeband 3, 4 an den beiden Überständen $Ü_1$ und $Ü_2$ mit der jeweils nach außen weisenden Klebebeschichtung 3 ausgerichtet wird. Bei dem ersten Überstand $Ü_1$ handelt es sich um den einleitend bereits angesprochenen Fixierstreifen. Dagegen fungiert der zweite Überstand $Ü_2$ als Verschlussstreifen, wie nachfolgend noch näher erläutert wird.

Man erkennt insbesondere anhand der Fig. 1B, dass dort die beiden Überstände $Ü_1$ und $Ü_2$ in etwa die gleiche Breite aufweisen. Tatsächlich wird hier jedoch meistens so gearbeitet, dass zwischen den Überständen $Ü_1$ und $Ü_2$ ein Breitenverhältnis von 1:1 bis 1:5 vorliegt. D.h., der Überstand $Ü_1$ bzw. der hierzu korrespondierende Fixierstreifen ist deutlich schmaler als der Überstand $Ü_2$ und der dazu gehörige Verschlussstreifen ausgelegt.

Außerdem ist das Klebeband 3, 4 insgesamt mit der bereits angesprochenen Breite B ausgerüstet, welche eine Breite C des Trägerbandes 5 um den Betrag der beiden Überstände $Ü_1$, $Ü_2$ übersteigt. D.h., im Rahmen des Ausführungsbeispiels gilt:

$$B = C + Ü_1 + Ü_2.$$

Anhand der Fig. 1B und 1C erkennt man, dass die zweite Klebebeschichtung 7 an der Rückseite des Trägers 4 gegenüber einer Zentralebene Z in Richtung auf den ersten Überstand $Ü_1$ versetzt angeordnet wird. Dieser Versatz trägt dem Umstand Rechnung, dass bei der Anbringung der Ummantelung entsprechend der Darstellung nach Fig. 2 das Laminat 3, 4, 5 das langgestreckte Gut 2 unter Berücksichtigung einer mehr als einfachen Umdrehung umhüllt, so dass keine unbedeckten Bereiche des langgestreckten Gutes 2 beobachtet werden und die an dieser Stelle umschlossenen Kabel optimal vor mechanischen Einwirkungen einen Schutz erfahren.

Die zweite Klebebeschichtung 7 verfügt über eine Breite D, welche der Breite des zweiten Überstandes $Ü_2$ bzw. des Verschlussstreifens entspricht respektive die Breite des fraglichen Überstandes $Ü_2$ überschreitet. Der jeweilige Überstand $Ü_1$, $Ü_2$ verfügt seinerseits über eine Breite, welche im Vergleich zur Breite B des Klebebandes deutlich kleiner ausgelegt ist. Tatsächlich werden an dieser Stelle Breiten des Überstandes $Ü_1$, $Ü_2$ beobachtet, die im Bereich von 5 % bis 30 % der Breite des Klebebandes liegen. D.h., es gilt:
$Ü_1$, $Ü_2 \approx$ 0,05 bis 0,3 B.

Dadurch, dass das Klebeband 3, 4 an seinen beiden Überständen $Ü_1$, $Ü_2$ mit der jeweils nach außen weisenden Klebebeschichtung 3 orientiert wird, lässt sich das Laminat 3, 4, 5 besonders einfach um das langgestreckte Gut 2 längswickeln. Zu diesem Zweck wird das Laminat 3, 4, 5 zunächst mit der Klebebeschichtung 3 am zugehörigen ersten Überstand $Ü_1$ bzw. dem Fixierstreifen an dem langgestreckten Gut 2 festgelegt.

Anschließend wird die Umhüllung gemäß der Darstellung in der Fig. 1C bzw. 2 um das langgestreckte Gut 2 längsgewickelt. Zum Abschluss wird der weitere zweite Überstand $Ü_2$, der Fixierstreifen, mit dem auf diese Weise hergestellten Längswickel verklebt. Dazu kommt die Klebebeschichtung 3 am zweiten Überstand $Ü_2$ in Kontakt mit der zweiten Klebebeschichtung 7. Auf diese Weise wird eine besonders intensive Verklebung beobachtet, weil beide Klebebeschichtungen 3, 7 miteinander verklebt werden (vgl. Fig. 2).

In der Fig. 2 ist dargestellt, dass die Umhüllung das langgestreckte Gut 2 unter Berücksichtigung einer fast zweifachen Längsumwicklung ummantelt. Das ist selbstverständlich nicht zwingend. D.h., im Rahmen der Erfindung liegen nicht nur mehrfache Umhüllungen, wie dargestellt, sondern kann das langgestreckte Gut 2 auch mit beispielsweise nur einer einfachen Umhüllung ausgerüstet werden. Das ist jedoch im Detail nicht dargestellt.

Es ist offensichtlich, dass je nach Variation der Breiten B, C, D und derjenigen der Überstände $Ü_1$ sowie $Ü_2$ unterschiedliche Gesamtbreiten des Laminates 3, 4, 5 und auch verschiedene Positionen sowie Größen des Fixierstreifens und Verschlussstreifens umgesetzt werden können. Dabei lassen sich insgesamt Gesamtbreiten des Laminates 3, 4, 5 im Bereich von ca. 80 mm bis 600 mm realisieren, so dass langgestreckte Güter 2 ganz unterschiedlichen Durchmessers ummantelt werden können. Hierbei handelt es sich selbstverständlich nur um beispielhafte und nicht einschränkende Abschätzungen.

## Patentansprüche

1. Verfahren zur Herstellung einer Ummantelung für langgestrecktes Gut (2), insbesondere einer Umhüllung für Kabelsätze, wonach

    - ein Klebeband (3, 4) aus einem Träger (4) und einer den Träger (4) an seiner Frontseite im Wesentlichen vollflächig bedeckenden ersten Klebebeschichtung (3), d.h. umfassend nicht nur flächenmäßig durchgängige Klebebeschichtungen der gesamten Frontseite des Trägers, sondern prinzipiell auch eine die Frontseite bedeckende Streifenbeschichtung oder sogar auch eine nur punktuelle Beschichtung der Frontseite mit dem betreffenden Kleber, mit einem klebebeschichtungsfreien Trägerband (5) zu einem Laminat (3, 4, 5) vereinigt wird, indem
    - das Klebeband (3, 4) mit seiner ersten Klebebeschichtung (3) unter Definition eines ersten Überstandes ($Ü_1$) an wenigstens einer seiner beiden Längskanten an das Trägerband (5) angelegt wird, und wonach
    - der Träger (4) des Klebebandes (3, 4) zusätzlich an seiner Rückseite teilflächig mit einer weiteren zweiten Klebebeschichtung (7) ausgerüstet wird,

**dadurch gekennzeichnet, dass**

    - die zweite Klebebeschichtung (7) an der Rückseite des Trägers (4) des Klebebandes (3, 4) erst dann aufgebracht wird, wenn das Klebeband (3, 4) mit dem Trägerband (5) zu dem Laminat (3, 4, 5) vereinigt worden ist oder
    - sowohl die erste Klebebeschichtung (3) als auch die zweite Klebebeschichtung (7) von vornherein auf dem Träger (4) vorgesehen werden und das solchermaßen ausgerüstete Klebeband (3, 4) insgesamt mit dem Trägerband (5) zu dem Laminat (3, 4, 5) vereinigt wird, und dass
    - das Klebeband (3, 4) eine Breite (B) aufweist, welche die Breite (C) des Trägerbandes (5) um den Betrag des ersten Überstandes ($Ü_1$) übersteigt, wobei
    - das Laminat (3, 4, 5) mit seinem ersten Überstand ($Ü_1$) parallel zum langgestreckten Gut (2) ausgerichtet und hieran festgelegt wird und anschließend um das Gut (2) längsgewickelt sowie abschließend mit der zweiten Klebebeschichtung (7) zum Längswickel verklebt wird.

2. Verfahren nach Anspruch 1, **dadurch gekennzeichnet, dass** das Klebeband (3, 4) mit seiner ersten Klebebeschichtung (3) unter Definition jeweils eines Überstandes ($Ü_1$, $Ü_2$) an seinen beiden Längskanten an das Trägerband (5) angelegt wird, wobei das Klebeband (3, 4) eine Breite (B) aufweist, welche die Breite (C) des Trägerbandes (5) um den Betrag der Überstände ($Ü_1$, $Ü_2$) übersteigt.

3. Verfahren nach Anspruch 2, **dadurch gekennzeichnet, dass** die beiden Überstände ($Ü_1$, $Ü_2$) ein Breitenverhältnis von 1:1 bis 1:5 und vorzugsweise im Bereich von 1:1 bis 1:3 aufweisen.

4. Verfahren nach Anspruch 2 oder 3, **dadurch gekennzeichnet, dass** das Klebeband (3, 4) an seinen beiden Überständen ($Ü_1$, $Ü_2$) mit der jeweils nach außen weisenden Klebebeschichtung (3) ausgerüstet wird.

5. Verfahren nach einem der Ansprüche 1 bis 4, **dadurch gekennzeichnet, dass** die zweite Klebebeschichtung (7) an der Rückseite des Trägers (4) gegenüber einer Zentralebene (Z) in Richtung auf den ersten Überstand ($Ü_1$) versetzt angeordnet wird.

6. Verfahren nach einem der Ansprüche 2 bis 5, **da-**

**durch gekennzeichnet, dass** die zweite Klebebeschichtung (7) eine Breite (D) aufweist, welche derjenigen des zweiten Überstandes ($Ü_2$) entspricht.

7. Verfahren nach einem der Ansprüche 1 bis 6, **dadurch gekennzeichnet, dass** der Überstand ($Ü_1$, $Ü_2$) eine Breite besitzt, welche im Vergleich zur Breite (B) des Klebebandes (3, 4) 5% bis 30 % und vorzugsweise 10% bis 20 % beträgt.

## Claims

1. A method for producing a sheath for elongated article (2), particularly a sheath for cable harnesses, according to which

    - an adhesive tape (3, 4) consisting of a carrier (4) and a first adhesive coating (3) which covers substantially the entire area of the front side of the carrier (4), i.e. comprising uninterrupted adhesive coatings which cover not only the entire front surface of the carrier but in principle also a tape coating which covers the front side or even a merely selective coating of the front side with the adhesive concerned is combined with a carrier tape (5) that is free from adhesive to form a laminate (3, 4, 5),
    - the adhesive tape (3, 4) with its first adhesive coating (3) is placed with at least one of its long edges against the carrier tape (5), thereby defining a first overhang ($Ü_1$, and according to which
    - the carrier (4) of the adhesive tape (3, 4) is also furnished with a further, second adhesive coating (7) on a part of the rear side thereof,

    **characterized in that**

    - the second adhesive coating (7) is not applied to the rear of the carrier (4) of the adhesive tape (3, 4) until the adhesive tape (3, 4) has been combined with the carrier tape (5) to form the laminate (3, 4, 5), or
    - both the first adhesive coating (3) and the second adhesive coating (7) are provided on the carrier (4) at the outset, and the adhesive tape (3, 4) processed in this way is combined with the carrier tape (5) to form the laminate (3, 4, 5), and that
    - the adhesive tape (3, 4) has a width (B) which exceeds the width (C) of the carrier tape (5) by the amount of the first overhang ($Ü_1$), wherein
    - the laminate (3, 4, 5) is aligned so that the first overhang ($Ü_1$) thereof extends parallel to the elongated article (2) and is attached thereto, and then wound lengthwise around the article (2) and is finally joined adhesively with the second adhesive tape (7) to form a lengthwise winding.

2. The method according to claim 1, **characterized in that** the adhesive tape (3, 4) with its first adhesive coating (3) is placed with its two long edges against the carrier tape (5), thereby defining one overhang ($Ü_1$, $Ü_2$) each case, wherein the adhesive tape (3, 4) has a width (B) which exceeds the width (C) of the carrier tape (5) by the amount of the two overhangs ($Ü_1$, $Ü_2$).

3. The method according to claim 2, **characterized in that** the two overhangs ($Ü_1$, $Ü_2$) have a width ratio from 1:1 to 1:5 and preferably in the range from 1:1 to 1:3.

4. The method according to claim 2 or 3, **characterized in that** the adhesive tape (3, 4) is furnished on both overhangs ($Ü_1$, $Ü_2$) thereof with the adhesive coating (3) facing outwards in both cases.

5. The method according to any one of claims 1 to 4, **characterized in that** the second adhesive coating (7) is arranged on the rear side of the carrier (4) so as to be offset in the direction of the first overhang ($Ü_1$) with respect to a central plane (Z).

6. The method according to any one of claims 2 to 5, **characterized in that** the second adhesive coating (7) has a width (D) which corresponds to that of the second overhang ($Ü_2$).

7. The method according to any one of claims 1 to 6, **characterized in that** the overhang ($Ü_1$, $Ü_2$) has a width which is equal to 5 % to 30 % and preferably 10 % to 20 % of the width (B) of the adhesive tape (3, 4) .

## Revendications

1. Procédé de fabrication d'un gainage pour un produit allongé (2), notamment d'une enveloppe pour des faisceaux de câbles, selon lequel

    - une bande adhésive (3, 4) composée d'un support (4) et d'un premier revêtement adhésif (3) recouvrant pour l'essentiel totalement en surface le support (4) sur sa face avant, c'est-à-dire comprenant non seulement des revêtements adhésifs continus en surface de toute la face avant du support, mais également en principe un revêtement en bande couvrant la face avant ou même également un revêtement seulement ponctuel de la face avant avec l'adhésif concerné, est jointe pour former un produit stratifié (3, 4, 5) à une bande de support (5) exempte de revêtement adhésif,

- la bande adhésive (3, 4) avec son premier revêtement adhésif (3) étant appliquée sur au moins un de ses deux bords longitudinaux sur la bande de support (5) en définissant une première couche en débord ($Ü_1$) et selon lequel

- le support (4) de la bande adhésive (3, 4) est sur une partie de la surface dotée en plus sur son envers d'un autre deuxième revêtement adhésif (7),

**caractérisé en ce que**

- le deuxième revêtement adhésif (7) n'est appliqué sur l'envers du support (4) de la bande adhésive (3, 4) que si la bande adhésive (3, 4) a été jointe à la bande de support (5) pour former le produit stratifié (3, 4, 5) ou

- tant le premier revêtement adhésif (3) que le deuxième revêtement adhésif (7) sont prévus dès le départ sur le support (4) et la bande adhésive (3, 4) dotée de cette façon est jointe totalement avec la bande de support (5) pour former le stratifié (3, 4, 5) et **en ce que**

- la bande adhésive (3, 4) comporte une largeur (B), laquelle dépasse la largeur (C) de la bande de support (5) de l'importance de la première couche en débord ($Ü_1$),

- le stratifié (3, 4, 5) étant orienté avec sa première couche en débord ($Ü_1$) parallèlement au produit allongé (2) et y est fixé et est ensuite enroulé longitudinalement autour du produit (2) et est finalement collé avec le deuxième revêtement adhésif (7) à l'enroulement longitudinal.

2. Procédé selon la revendication 1, **caractérisé en ce que** la bande adhésive (3, 4) est posée avec son revêtement adhésif (3) en définissant respectivement une couche en débord ($Ü_1$, $Ü_2$) sur ses deux bords longitudinaux sur la bande de support (5), la bande adhésive (3, 4) comportant une largeur (B), laquelle dépasse la largeur (C) de la bande de support (5) de l'importance des couches en débord ($Ü_1$, $Ü_2$).

3. Procédé selon la revendication 2, **caractérisé en ce que** les deux couches en débord ($Ü_1$, $Ü_2$) comportent un rapport de largeur de 1 : 1 à 1 : 5 et de préférence dans une plage de 1 : 1 à 1 : 3.

4. Procédé selon la revendication 2 ou 3, **caractérisé en ce que** la bande adhésive (3, 4) est respectivement dotée sur ses deux couches en débord ($Ü_1$, $Ü_2$) du revêtement adhésif (3) orienté vers l'extérieur.

5. Procédé selon l'une quelconque des revendications 1 à 4, **caractérisé en ce que** le deuxième revêtement adhésif (7) est disposé de façon décalée en direction de la première couche en débord ($Ü_1$) au dos du support (4) par rapport à un plan central (Z).

6. Procédé selon l'une quelconque des revendications 2 à 5, **caractérisé en ce que** le deuxième revêtement adhésif (7) comporte une largeur (D), laquelle correspond à celle de la deuxième couche en débord ($Ü_2$).

7. Procédé selon l'une quelconque des revendications 1 à 6, **caractérisé en ce que** la couche en débord ($Ü_1$, $Ü_2$) possède une largeur, laquelle est 5 % à 30 % et de préférence de 10 % à 20 % en comparaison de la largeur (B) de la bande adhésive (3, 4).

Fig.1A

Fig.1B

Fig.1C

EP 3 197 968 B1

Fig.2

**EP 3 197 968 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007012475 U1
- US 4327246 A
- EP 1875573 B1
- EP 1312097 B1
- EP 1300452 A2